# EUROPEAN PATENT APPLICATION

(11) **EP 3 954 199 A1**
(43) Date of publication of application: **16.02.2022**
(21) Application number: 20191134.4
(22) Date of filing: 14.08.2020
(51) Int. Cl.: A01G 9/14, A01G 31/06

(54) **VERTICAL FARMING SYSTEM AND METHOD USING THE SAME**

(71) Applicant: InFarm - Indoor Urban Farming GmbH, 12099 Berlin (DE)
(72) Inventor: Deshpande, Rohit, 12099 Berlin (DE); Fischer, Jonas, 12099 Berlin (DE); Sharma, Arundathi, 12099 Berlin (DE); Sofer, Orie, 12099 Berlin (DE); Schilf, Fabian, 12099 Berlin (DE); Zerbst, Sam, 12099 Berlin (DE); Noppenberger, Christian, 91315 Höchstadt (DE)
(74) Representative: adares Patent- und Rechtsanwälte Reininger & Partner GmbB

(57) **Abstract**

The invention relates to a vertical farming system comprising:
- a plurality of tray-receptacles (3) each tray-receptacle (3) having a tray-surface area for a soilless growing environment for plants,
- a vertical supporting structure (1) arranged and adapted to accommodate the plurality of tray-receptacles (3) in a vertically stacked arrangement along a plurality of shelf positions (13),
- a tray-receptacle transport device (6) arranged and adapted to move the tray-receptacles (3) along the vertical supporting structure (1) between the different shelf positions (13) and
-an airflow-ducting device (2) arranged and adapted to transport an airflow to and from the plurality of shelf positions (13),
wherein the vertical farming system further comprises
- a plurality of vertically stacked airflow docking members (200) to provide airflow from the air ducting device (2) to the shelf positions (13) and
- a plurality of airflow-benches (4), each airflow-bench (4) being attached to at least one of the airflow docking members (200) and being arranged and adapted to provide a downward-oriented airflow covering at least half of the tray-surface area of a tray-receptacle (3) being accommodated in a shelf position (13) underneath the respective airflow-bench (4).

Furthermore, the invention relates to a method using such a vertical farming system to grow plants.

## Description

The present invention relates to a vertical farming system and a method using the same. Traditional vertical farming techniques vary widely in their approach towards air distribution and heat management of the LED lighting typically used in controlled-environment agriculture for vertical farming. In most cases, the physical clearance above the vertically stacked tray-receptacles for growing the plants is large enough to allow horizontal airflow across the leaf canopies of all plants, and in some systems this airflow is also used to air-cool the LED lighting.

Within the confined space of such systems, the desire to stack the tray-receptacles compactly on the vertical axis, and the desire to work with large horizontal dimensions of the tray-receptacles, imply certain conditions on a horizontal airflow above the plants' leaf canopies. To achieve the desired environmental condition high airspeeds of the horizontal airflow are required at the supply air outlet and would result in large gradients of airspeed, temperature, humidity as well as CO2 levels across either of the horizontal axes of the different tray-receptacles. The horizontal supply of conditioned air to vertically growing plants limits the promotion of gas exchange at the deeper layers below the plants' leaf canopies which limits plant growth efficiency and plant growth uniformity.

Such a vertical farming system is known for example from international patent application WO2019/077569A1. This system comprises:
- a plurality of tray-receptacles each tray-receptacle having a tray-surface area for a soilless growing environment for plants,
- a vertical supporting structure arranged and adapted to accommodate the plurality of tray-receptacles in a vertically stacked arrangement along a plurality of shelf positions,
- a tray-receptacle transport device arranged and adapted to move the tray-receptacles along the vertical supporting structure between different shelf positions and
- an airflow-ducting device arranged and adapted to transport an airflow to and from the plurality of shelf positions.

It is an object of the present invention to improve the airflow management for vertically stacked farming systems.

This problem is solved by a vertical farming system having the features of claim 1 and by a method using such a farming system according to claim 15.

According to the present invention this problem is solved by a vertical farming system that comprises:
- a plurality of vertically stacked airflow docking members to provide airflow from the air ducting device to the shelf positions and
- a plurality of airflow-benches, each airflow-bench being attached to at least one of the airflow docking members and being arranged and adapted to provide a downward-oriented airflow covering at least half of the tray-surface area of a tray-receptacle being accommodated in a shelf position underneath the respective airflow-bench.

The downward-oriented airflow is designed and adapted to equally distribute the same environmental conditions, in particular temperature, relative humidity and CO2 levels across a large surface area, namely of a tray-receptacle being accommodated in a shelf position underneath the respective airflow-bench. Furthermore, the airflow then arrives at the leaf canopy of the plants from above, traveling essentially vertically down into deeper layers of the leaf canopy to provide a defined air speed across the leaf surfaces. This method improves the photosynthetic activity of plant growth by ventilating vertically from above and thus promoting gas exchange at deeper leaf canopy levels. Thereby, a uniform plant growth is achieved on this tray-receptacle. Preferably, the downward-oriented airflow is covering 50% to 100%, more preferably 75% to 95% of the tray surface-area of the tray-receptacle. Therefore, this system contributes to improved plant health as gas exchange dead spots are avoided due to the downward oriented, evenly distributed airflow.

For achieving equal environmental conditions between different plants on the tray-surface area of at least one of the tray-receptacles it is preferred to provide an evenly distributed flat airflow to this tray-receptacle. In the context of this patent application an evenly distributed flat airflow is an airflow that exits from a surface area of the airflow-bench and that, within this surface area, provides equal or similar gas flow rates per defined surface unit. Similar airflow rates according to this invention are defined as having a difference of less than 10% per defined surface unit of the airflow-bench emitting the downward-oriented airflow.

According to this invention a bench is a structure that extends horizontally in a plane covering a surface if regarded in a vertical direction. A bench needs to have a bench frame that allows accommodating the bench as a shelf in the vertical supporting structure with its shelf positions. However, one single bench frame may be used for a plurality of

The vertically stacked shelf positions may be arranged in an equal distance pattern or in a pattern with a number of first shelf positions providing a first distance between adjacent shelf positions and a number of further shelf positions providing a further distance between shelf positions being different to the first distance. Depending on the kind of plants that are grown by the vertical farming system it may be advantageous to provide different distances between adjacent shelf positions. Some plants need more vertical space than others during different stages of their growth cycle. Therefore, it is also possible to provide shelf positions on the vertical supporting structures that may be adjusted to adapt to different spacing requirements between adjacent shelf positions.

To provide a vertical farming system for efficient farming, in particular for indoor farming, it is advantageous that between vertically adjacent shelf positions at least one airflow docking member of the airflow-ducting device is arranged. Thereby, a dense vertical stacking of tray-receptacles is possible without compromising on the supply of a downward-oriented airflow that is preferably equally distributed along the tray-surface area. This is because above each tray-receptacle an airflow-bench may be docked to the airflow docking member providing optimized growing conditions, in particular temperature, humidity level and CO2 concentration.

It is further preferred, that the airflow-ducting device comprises airflow extraction means that are arranged laterally to the vertical supporting structure at a plurality of shelf position to extract the downward-oriented airflow along at least one edge of an accommodated tray-receptacle after an airflow deflection in the range of 60 to 120 degrees, preferably in the range of 80 to 110 degrees. The range of airflow deflection is to be in relation to the initially downward-oriented, usually vertically oriented, airflow. The extraction means may be positioned along any of the tray receptacle's edges. This means that the extraction means may be situated both along one single edge and along several edges. Preferably, the extraction means are attached to the vertical supporting structure. As an alternative or in addition to that the extraction means may be mounted to another vertical supporting structure.

A further preferred embodiment of the vertical farming system is characterized in that in a vertical direction between at least some of the airflow-docking members and respective shelf positions an LED docking member for an LED-bench is positioned, preferably within an airflow-bench, comprising a plurality of LEDs adapted and arranged to provide light for indoor farming of plants. Preferably, the vertical farming system is used for indoor farming. Therefore, artificial lighting means are needed to provide optimized indoor growing conditions for plants. LEDs are preferred lighting means as their emission spectrum allows an adaptation to the specific needs of the respective plants in their individual growing cycle status.

It is advantageous to provide a vertical farming system with several LED-benches with LEDs, the LED-benches being coupled to the LED-docking members, the LED-benches comprising openings between the LEDs to let the downward-oriented airflow pass through the LED-bench providing air-cooling to the LEDs. The LED-benches comprise LED printed circuit boards that are mounted to aluminum extrusion profiles, thereby creating a single LED fixture. The aluminum extrusion profiles also act as heat sinks and are designed to assist in convection of the heat from the LEDs to the downward-oriented airflow being blown on them. Depending on the flow rates of the downward-oriented airflow a defined amount of heat dissipated by the aluminum extrusions of the LED fixture is evacuated from the LEDs. Thereby, it is possible to optimize the temperature conditions of the LEDs both to maximize their lifetime and for running the LEDs at working conditions providing their most efficient power-to-light conversion.

The LED-bench may be installed in close proximity or even in physical contact with airflow-bench components or. In any scenario the LED-bench is positioned between the airflow-bench and the tray-receptacle. For both scenarios both airflow-bench and LED-bench may be designed as a single LED-airflow-bench. However, it is advantageous for maintenance and repair if both LED-bench and airflow-bench components may be installed and/or replaced individually.

Preferably, each LED-bench comprises several horizontally adjacent LED-bench cassettes. Thereby, maintenance and replacement of single LED-bench cassettes is significantly simplified compared to a scenario in which the whole single unit LED-bench needs repair and/or replacement.

In a further preferred embodiment, each airflow-bench comprises at least one perforated member arranged and adapted to create the downward-oriented airflow. The perforated member may be made of a solid sheet of plastic or metal provided or any other suitable material with a sufficient amount and density of openings to generate the evenly distributed, downward-oriented airflow.

Preferably, the airflow-bench comprises two vertically spaced perforated members. In airflow direction the first perforated member is equalizing the airflow and the second perforated member is defining the velocity of the airflow coming out of the airflow-bench. Preferred velocity ranges are 0.2 to 1.0 m/second, more preferably 0.4 to 0.8 and still more preferably 0.5 to 0.7 m per second.

The vertical distance of the two perforated members can be provided using a frame distancing the two perforated sheet-like members. Furthermore, it is advantageous if the airflow-bench comprises a ducting hood situated above the one or several perforated members. The ducting hood provides a certain volume to build up a defined pressure to force the conditioned air through the preferably several perforated members. Using sheet-like perforated members it is advantageous if the bottom of the ducting hood is formed by the perforated member or by one of the several perforated members.

It is preferred for any of the above-mentioned embodiments comprising at least one perforated member that each perforated member is made of a textile fabric. The fabric may be a woven or a knitted textile. It is advantageous to make the perforations of the textile by a laser beam. This allows an easy adaption with respect to diameter and density of the perforations. By this parameter, the velocity of the downward-oriented airflow and the related airflow-rate can be adjusted if the pressure created by the incoming airflow is held at a constant level.

For all mentioned embodiments of the vertical farming system it is preferred that at least one of the airflow-benches comprises a plurality of horizontally adjacent airflow-bench-cassettes. Again, the modular structure of a bench comprising several adjacent bench cassettes is advantageous for assembly, repair and replacement during installation, use and maintenance times of the vertical farming system.

Regarding production costs and to run the vertical farming system efficiently it is preferred that the airflow-bench-cassettes are designed identically regarding their external shape and size. Thereby, they can be coupled to any of the system's airflow docking members above any tray-receptacle. Apart from their identical external shape and size the airflow-bench-cassettes may differ regarding their perforation design. Perforation design means diameter, surface density and distribution pattern of the perforations in the at least one perforated member.

Furthermore, the invention relates to a vertical farming method using a system for vertical farming as described above comprising at least one perforated member in each airflow-bench. The vertical farming method comprises the step of adjusting the downward-oriented airflow by setting an airflow pressure provided at the airflow docking members and by providing an adapted perforation design of the at least one perforated member of the airflow-benches.

A preferred embodiment of the vertical farming method is characterized in the step of adjusting the downward-oriented airflow by adapting the airflow-bench perforation design to the specific growth cycle state of plants in the respective tray-receptacles being accommodated underneath the airflow-benches. This adaption step for the plants being in a certain stage of their growth cycle on a specific tray-receptacle can be done by one of the following actions or by a combination of at least two of the following actions:
- moving the specific tray-receptacle to a shelf position underneath a different airflow-bench
- adapting the airflow pressure provided at the airflow docking member above the specific tray-receptacle and
- exchanging the airflow-bench or at least one airflow-bench cassette, if the airflow bench being accommodated above the specific tray-receptacle shows a modular structure.

As outlined above, the perforation design of airflow-benches means diameter, surface density and distribution pattern of the perforations in the at least one perforated member of the airflow-bench.

In the following an embodiment of a vertical farming system according to the invention is described in detail referring to the figures. The figures show:
Fig. 1 a perspective overview of the vertical farming system;
Fig. 2 a detail of a shelf-like structure as shown in Fig. 1 with a number of vertically stacked airflow-benches 4 with and without tray-receptacles 3 arranged underneath the airflow-benches 4;
Fig. 3 an exploded view of an airflow-bench 4 with an LED-bench 5 together with assigned horizontal sections of the airflow supply ducts 20 and parts of the airflow extraction ducts 21;
Fig. 4 a sectional view of an airflow-bench 4 and an LED-bench 5; vertically stacked above a tray-receptacle 3;
Fig. 5. a perspective sectional view of an airflow-bench 4 and an LED-bench 5 vertically stacked above a tray-receptacle 3;
Fig. 6 an enlarged detail from Fig. 5 marked with VI in Fig. 5 and
Fig. 7 a schematic view of method steps for a vertical farming method using the inventive vertical farming system.

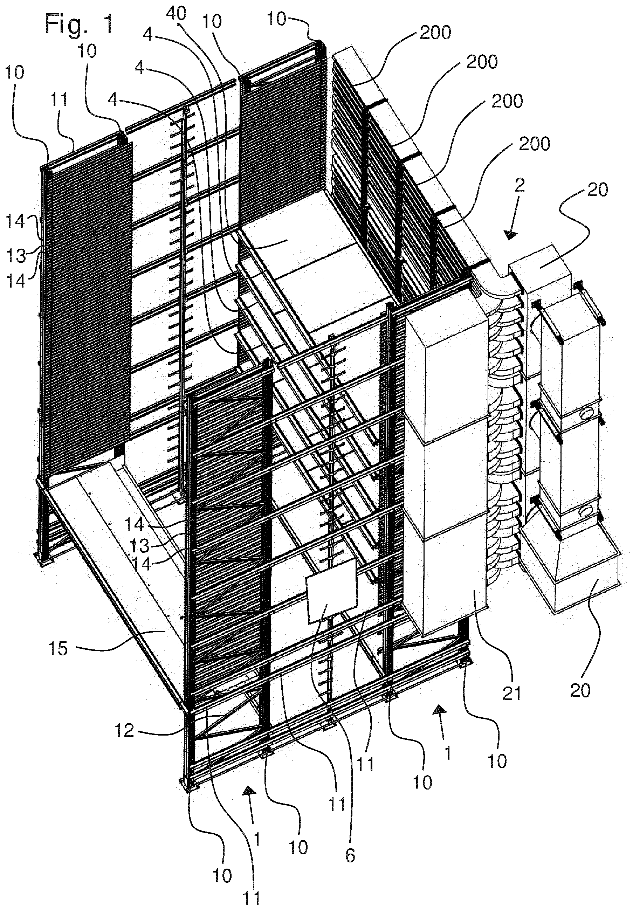

Fig. 1 shows a perspective overview of one possible embodiment of the vertical farming system. There are two shelf-like vertical supporting structures 1 each being constructed by four beams 10. Two beams 10 form one side panel of the shelf-like structure and two further beams 10 form the opposing side panel of the shelf-like structure. Both pairs of beams 10 of each shelf side panel comprise reinforcing braces 12 that extend in a zigzag pattern up and down in a vertical direction between the adjacent beams 10 of each shelf side panel. Between the two shelf side panels, several vertically stacked shelf positions 13 are provided by a structure made of several shelf position struts 14. The shelf position struts 14 extend horizontally and they are mounted between the two beams 10 of each shelf side panel. Thereby, the position struts 14 serve as shelf supports for tray receptacles having a tray surface area for a soilless growing environment for plants. Between two adjacent position struts 14 a shelf position is formed. In Fig. 1 tray receptacles being accommodated in these shelf positions 13 are not shown. However, accommodated in the vertical supporting structure 1 they look similar to an access opening shelf 15 providing structural reinforcement extending between the two side panels of the shelf-like vertical supporting structure 1 shown on the left side of Fig. 1.

On the right-hand side of Fig. 1 a second shelf-like vertical structure 1 is arranged. This second vertical structure 1 shows the same arrangement of four beams 10, with reinforcing braces 12 on each side panel of the shelf-like structure and a plurality of horizontally arranged position struts 14 providing a plurality of shelf positions 13 each between two adjacent shelf position struts 14.

The first and the second shelf-like vertical structure 1 are both reinforced and kept at a defined distance to each other by a number of horizontal struts 11 that are installed to the same side panels of the first and second shelf-like vertical structure 1. The same arrangement of reinforcing horizontal struts 11 is mounted to the opposing side panels of both vertical structures. Thereby, a cage-like structure is formed. In the middle section between the first and the second shelf-like vertical structure 1 a tray receptacle transport device 6 is installed. This receptacle transport device 6 is arranged and adapted to transport and accommodate a plurality of tray-receptacles and air flow benches in a vertically stacked arrangement along the plurality of shelf positions 13. Being situated in the middle section of the vertical farming system the receptacle transport device 6 may handle the tray-receptacles of both shelf-like vertical structures 1 facing each other. The receptacle transport device 6 is shown in a purely schematic way. It may be an electrically driven elevator-like device having several gripping arms to manipulate the tray receptacles. A person skilled in the art of logistics using automated shelf systems knows how to realize the function of moving and accommodating the tray receptacles within the shelf-like structures.

Within the right-hand side shelf-like vertical structure 1 several airflow-benches 4 are accommodated in a vertically stacked arrangement. These airflow-benches 4 are formed like shelves. Each of these shelves comprises four horizontally abutting airflow-bench cassettes 40. Each of these airflow-bench cassettes 40 is coupled via a flange to an airflow docking member 200 of an airflow supply duct 20 that extends horizontally behind every airflow-bench 4. These airflow supply ducts 20 are components of a bigger airflow ducting device 2 that is arranged and adapted to transport an airflow to and from the plurality of shelf positions 13. The extraction of the airflow from the shelf positions 13 is done by a plurality of airflow extraction ducts 21.

Both the airflow extraction ducts 21 and the airflow supply ducts 20 comprise both sections that extend vertically along the beams 10 of the shelf-like vertical structure and horizontal sections running to and from the vertically stacked shelf positions 13. In this embodiment the horizontal sections of the airflow extraction ducts 21 and the airflow supply ducts 20 are intertwined if looked at vertically. Thus, in the vertical direction a horizontal section of the airflow extraction ducts 21 and a horizontal section of the airflow supply ducts 20 are alternately arranged.

For a working vertical farming system comprising two shelf-like vertical structures 1 both shelf-like vertical structures 1 are equipped with an airflow-ducting device 2 comprising airflow supply ducts 20 and airflow extraction ducts 21 for each shelf position 13 on the respective shelf. For the sake of clarity, the airflow ducting device 2 of the left-hand side of Fig. 1 is not shown to provide more insights to the inner sections of the whole system. The airflow ducting device 2 on the left-hand side of Fig. 1 would for instance be mirror-inverted to the plotted airflow ducting device 2 that is shown on the right-hand side of Fig. 1.

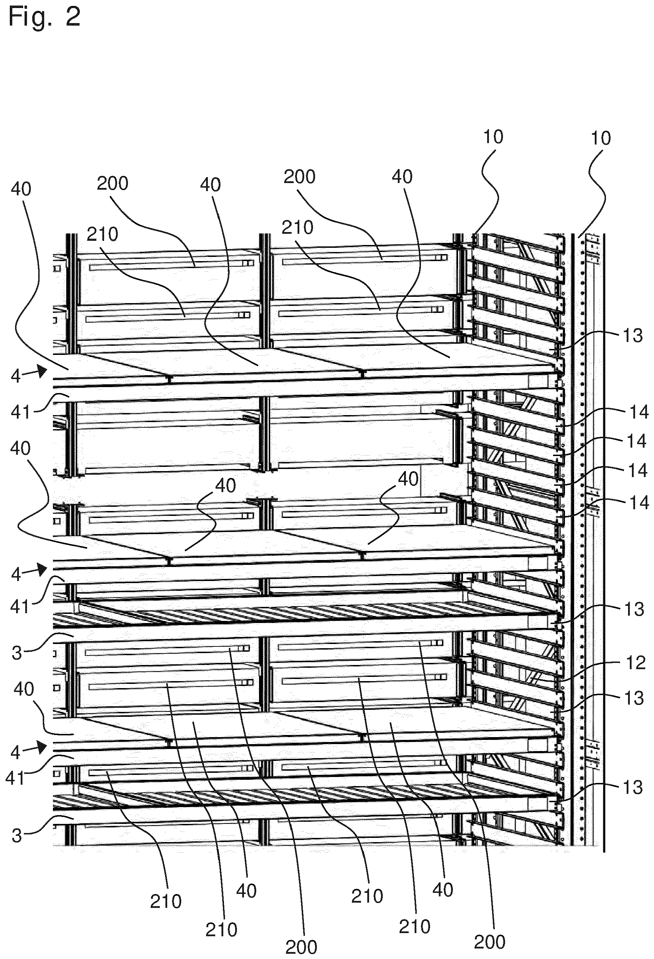

Fig. 2 shows a detail of a shelf-like structure as shown in Fig. 1 with a number of vertically stacked airflow-benches 4 with and without tray-receptacles 3 arranged underneath the respective airflow-benches 4. The same components are referred to with the same reference numerals. Therefore, the explanations as mentioned above apply and shall not be repeated in the following. Each airflow-bench 4 consists of four adjacently abutting airflow cassettes 40 laying in a common airflow-bench frame 41.

Between both shown beams 10 the horizontally stacked shelf position struts 14 are mounted equidistantly creating a structure of possible shelf positions 13 between two adjacent position struts 14. Into which of these shelf positions 13 a shelf receptacle 3 is in fact accommodated depends in practice on the space requirement of the plants that are grown on the tray-surface area. This space requirement depends in particular on the size of those plants during their period of growth between seeding and harvesting. At any time during the period of growth it is necessary to provide the plants with an airflow at a suitable temperature, humidity and the necessary amount of CO2. All of these factors are influenced essentially by the airflow that is transported to and from the growing plants. Each airflow-bench 4 is arranged and adapted to provide a downward-oriented airflow covering at least half of the tray-surface area of a tray-receptacle 3 being accommodated in a shelf position 13 underneath the respective airflow-bench 4.

In this embodiment the shelf positions 13 between adjacent shelf position struts 14 are used to accommodate both airflow-benches 4 and tray-receptacles 3. Which of the shelf positions 13 is used by an airflow-bench 4 and which of shelf positions 13 is used by the tray-receptacles 3 depends on the arrangement of the horizontal sections of the airflow supply ducts 20 with their airflow docking members 200 and the horizontal sections of the airflow extraction ducts 21 with their airflow extraction means 210. Each of the airflow-benches 4 is coupled to a number of airflow docking members 200. For this embodiment each of the adjacently abutting airflow-bench cassettes 40 is coupled to one respective airflow docking member 200 of one of the horizontal sections of the airflow supply ducts 20. Thereby, the position of the horizontal sections of the airflow supply ducts 20 with their airflow docking members 200 and the horizontal sections of the airflow extraction ducts 21 with their airflow extraction means 210 define, which of the shelf positions 13 is to be used to accommodate a tray receptacle 3, as the tray receptacle 3 needs airflow extraction means arranged above the tray receptacle 3 and which of the shelf positions 13 is to be used to accommodate an airflow-bench 4, as an airflow-bench 4 needs to be coupled to airflow docking members 200.

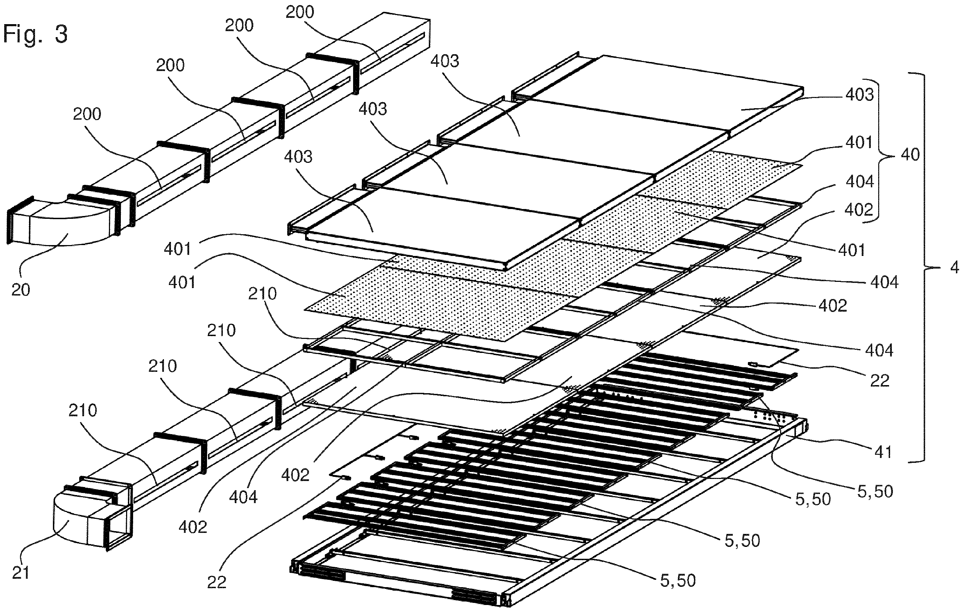

Fig. 3 shows an exploded view of an airflow-bench 4 and an LED-bench 5 together with assigned horizontal sections of the airflow supply ducts 20 and parts of the airflow extraction ducts 21. The airflow-bench 4 is shown with its components. The whole airflow-bench 4 is structurally framed by the airflow-bench frame 41 that is framing all of the four adjacently abutting airflow-bench cassettes 40. Each of the airflow-bench cassettes 40 is described with its structural elements top down in the following. On top each of the airflow-bench cassettes 40 shows a ducting hood 403. On the left-hand side of each airflow-bench cassette 40 a flange is formed. This flange can be mechanically coupled to the airflow docking member 200 of the assigned horizontal section of the airflow supply duct 20. Underneath the ducting hood 403 a first perforated member 401 having a flat shape forms the bottom of the ducting hood 403. This first perforated member 401 is mounted on an intermediate diffusion frame 404 covering the flat shape of the first perforated member 401 and providing mechanical support to the first perforated member 401 by cruciform frame struts. Underneath the intermediate diffusion frame 404 a further perforated member 402 is installed forming the bottom of the airflow-bench cassette 40.

Each of the four airflow-bench cassettes lies adjacently abutting in the common airflow-bench frame 41. Underneath all four airflow-bench cassettes 40 an LED-bench 5 is installed. For this purpose, the airflow-bench frame 41 houses several adjacently abutting LED-bench cassettes 50 of the LED-bench 5. In this embodiment each of the LED-bench cassettes 50 comprises printed circuit boards mounted to aluminum extrusion profiles creating LED fixtures. The extrusion profiles also act as heat sinks and are designed to assist in convection of the heat from the LEDs to the airflow air being blown along them. Each of the LED-bench cassettes 50 is electro-mechanically coupled to LED docking members 22 supplying each LED-bench cassette 50 with power. The LED docking members 22 are mounted to the airflow-bench frame 41 that also serves as a structural frame for the LED-bench cassettes 50. Thereby, in this embodiment for efficiency and cost saving reasons the LED-bench 5 is integrated into the airflow-bench 40. However, in other embodiments the LED-bench 5 may also comprise a frame structure of its own. Thereby the maintenance and assembly of the LED-bench 5 and its LED-bench cassettes 50 becomes possible without the necessity to remove the airflow-bench cassettes 40 from the common airflow-bench frame 41.

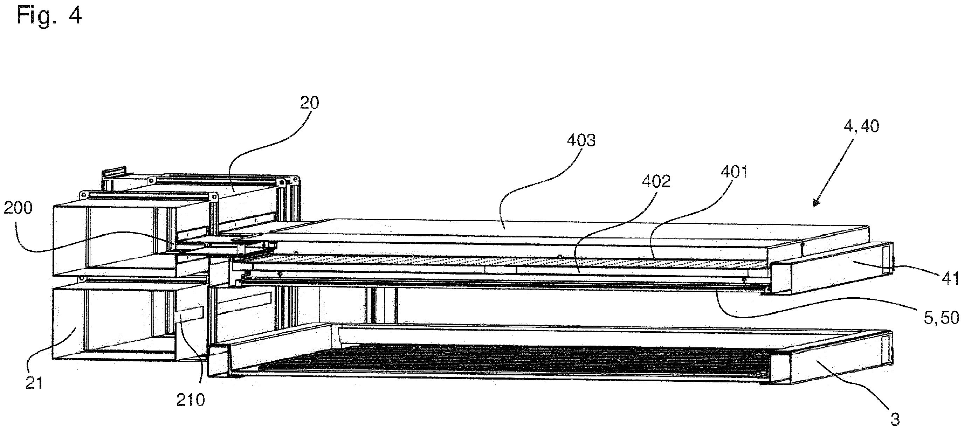

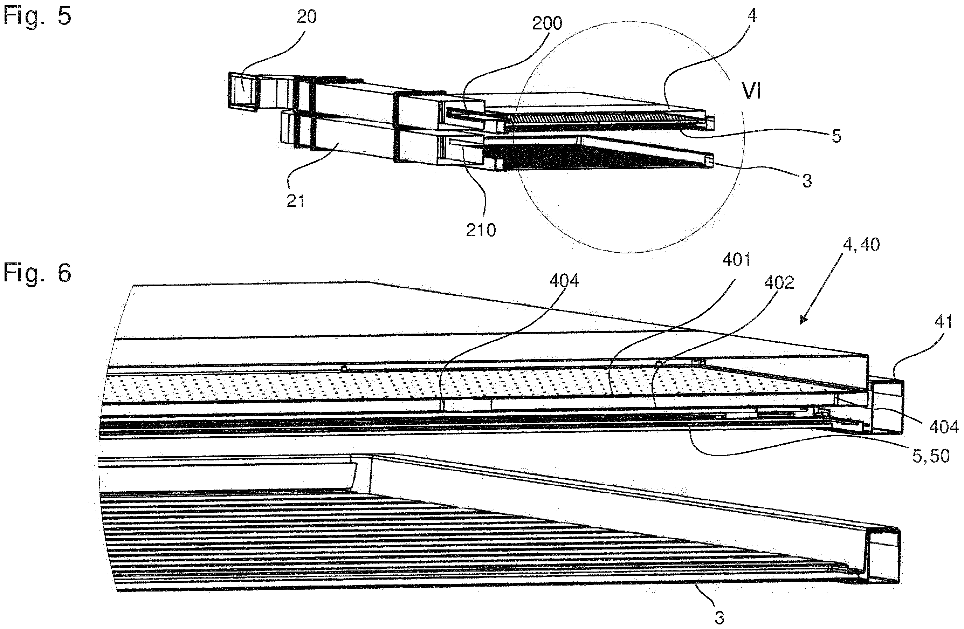

Fig. 4 shows a sectional view of an airflow-bench 4 with an LED-bench 5 consisting of several horizontally abutting LED-bench cassettes 50, vertically stacked above a tray-receptacle 3, Fig. 5. shows a perspective sectional view of an airflow-bench 4 and an LED-bench 5 vertically stacked above a tray-receptacle 3 and Fig. 6 shows an enlarged detail from Fig. 5 marked with VI in Fig. 5. The airflow-bench 4 comprises all elements that have been shown and described in the exploded view of Fig. 3. Therefore, the same reference numerals refer to the same elements and the respective explanations apply. An airflow coming in via the horizontal section of the airflow supply ducts 20 enters the ducting hood 403 via its flange that is coupled to the airflow supply member 200. The airflow pressure that is built up inside the ducting hood depends on several factors: first of all, the air flow rate and its according pressure inside the airflow supply ducts 20; furthermore, size and surface density of the perforations defining both the first perforated member 401 and the further perforated member 402. If size and surface density of the perforations of both the first perforated member 401 and the further perforated member 402 are equal an airflow is created that is equally emerging over the surface area of the further perforated member 402. Thereby, homogenous airflow conditions can be provided to the tray-surface area of the tray receptacle 3 arranged underneath for a soilless growing environment for plants on its tray surface area. Thereby, an efficient and effective resource management is provided in order to achieve the desired environmental conditions underneath an airflow-bench 4. The airflow arrives vertically from the airflow-bench 4 at the canopy of the plants that are grown underneath on the tray-surface area of the tray receptacle 3. This is promoting air exchange at deeper canopy levels improving the plants' health by avoiding so called dead spots within the plants. Thereby, increasing the vertical stacking of tray receptacles 3 becomes possible without compromising on the growing efficiency.

The use of textile materials for the perforated member 401 and the further perforated member 402 is a very cost efficient, durable and easy to maintain technique. Tried-and tested perforation size and surface densities are:
- for the perforated member 401, a diameter of 1.7 mm and a distance of 19.4 mm both in x- and y-direction and
- for the further perforated member 402, a diameter of 3.7 mm and a surface density of 40 mm both in x- and y-direction.

This leads to an airflow volume of 150 m3 per hour if incoming airflow conditions provide a pressure of 50 Pa above atmospheric pressure building-up in the ducting hood 403. And an airspeed of the emerging airflow of about 0.5 to 0.7 m per second.

If the airflow-bench 4 is combined with an LED-bench 5 as for example shown in Fig. 3 to Fig. 6 the lifetime and efficiency of the LEDs used in particular for indoor farming is increased as the LEDs are maintained in an optimal temperature range resulting in most efficient power-to-light conversion.

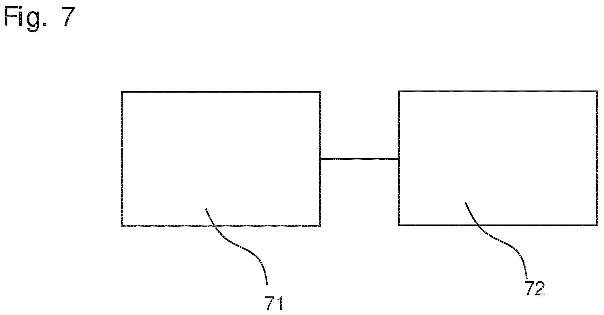

Fig. 7 shows a schematic view of method steps for a vertical farming method using the inventive vertical farming system comprising at least one perforated member 401,402. In a first step 71 such a vertical farming system is provided. In a second step 72 the downward-oriented airflow is adjusted by setting an airflow pressure provided at the airflow docking members 200 and/or by providing an adapted perforation design of the at least one perforated member 401,402 of the airflow-benches 4. This second step 72 adaption is driven by the requirement to provide an optimized airflow with regards to parameters like in particular CO2 content, humidity and airflow velocity that fits to the specific growth cycle stage of the plants on a specific tray-receptacle 3 being accommodated underneath the airflow bench 4. For this purpose, the tray transportation device 6 may move both tray receptacles 3 and airflow-benches 4 between different shelf positions 13.

### Reference numeral list:

- 1: vertical supporting structure
10 beam
11 strut
12 reinforcing brace
13 shelf position
14 shelf position strut
15 access opening shelf
- 2: airflow-ducting device
20 airflow supply ducts
200 airflow docking members
21 airflow extraction ducts
210 airflow extraction means
22 LED docking members
- 3: tray-receptacle
- 4: airflow-bench
40 airflow-bench cassette
401 first perforated member
402 further perforated member
403 ducting hood
404 intermediate diffusion frame
41 airflow-bench frame
- 5: LED-bench
50 LED-bench cassette
- 6: tray-receptacle transport device

## Claims

1. A vertical farming system comprising:
- a plurality of tray-receptacles (3) each tray-receptacle (3) having a tray-surface area for a soilless growing environment for plants,
- a vertical supporting structure (1) arranged and adapted to accommodate the plurality of tray-receptacles (3) in a vertically stacked arrangement along a plurality of shelf positions (13),
- a tray-receptacle transport device (6) arranged and adapted to move the tray-receptacles (3) along the vertical supporting structure (1) between the different shelf positions (13) and
- an airflow-ducting device (2) arranged and adapted to transport an airflow to and from the plurality of shelf positions (13),
**characterized in that**,
the vertical farming system further comprises
- a plurality of vertically stacked airflow docking members (200) to provide airflow from the air ducting device (2) to the shelf positions (13) and
- a plurality of airflow-benches (4), each airflow-bench (4) being attached to at least one of the airflow docking members (200) and being arranged and adapted to provide a downward-oriented airflow covering at least half of the tray-surface area of a tray-receptacle (3) being accommodated in a shelf position (13) underneath the respective airflow-bench (4).

2. A vertical farming system according to claim 1, **characterized in that** between vertically adjacent shelf positions (13) at least one of the airflow docking members (200) is arranged.

3. A vertical farming system according to claim 1 or 2, **characterized in that** the airflow-ducting device (2) comprises airflow extraction means (210) that are arranged laterally to the vertical supporting structure (1) at a plurality of shelf positions (13) to extract the downward-oriented airflow along at least one edge of an accommodated tray-receptacle (3) after an airflow deflection in the range of 60 to 120 degrees, preferably in the range of 80 to 110 degrees.

4. A vertical farming system according to one of claims 1 to 3, **characterized in that** in a vertical direction between at least some of the airflow-docking members (200) and respective shelf positions (13) an LED docking member (22) for an LED-bench (5) is positioned, preferably within an airflow-bench (4), comprising a plurality of LEDs adapted and arranged to provide light for indoor farming of plants.

5. A vertical farming system according to claim 4, having several LED-benches (5) with LEDs, the LED-benches (5) being coupled to the LED docking members (22), the LED-benches (5) comprising openings between the LEDs to let the downward-oriented airflow pass through the LED-benches (5) providing air-cooling to the LEDs.

6. A vertical farming system according to claims 4 to 5, **characterized in that** each LED-bench (5) comprises several horizontally adjacent LED-bench cassettes (50).

7. A vertical farming system according to any of the preceding claims, each airflow-bench (4) comprises at least one perforated member (401,402) arranged and adapted to create the downward-oriented airflow.

8. A vertical farming system according to any of claims 1 to 7, **characterized in that**, the airflow-bench (4) comprises two vertically spaced perforated members (401,402).

9. A vertical farming system according to claim 7 or 8, **characterized in that**, above the perforated member (401,402) the airflow-bench comprises a ducting hood (403).

10. A vertical farming system according to claim 9, **characterized in that**, the bottom of the ducting hood (403) is formed by one of the perforated members (401,402).

11. A vertical farming system according to any of claims 7 to 10, **characterized in that**, each perforated member (401,402) is made of a textile fabric.

12. A vertical farming system according to any of the preceding claims, **characterized in that** at least one of the airflow-benches (4) comprises a plurality of horizontally adjacent airflow-bench-cassettes (40).

13. A vertical farming system according to claim 12, **characterized in that** the airflow-bench-cassettes (40) are designed identically regarding their external shape and size.

14. A vertical farming method using a system according to any of claim 7 to 11, **characterized in that** the downward-oriented airflow is adjusted by setting an airflow pressure provided at the airflow docking members (200) and/or by providing an adapted perforation design of the at least one perforated member (401,402) of the airflow-benches (4).

15. A method for using a vertical farming system according to claim 14, **characterized in** the step of adjusting the downward-oriented airflow the airflow-bench perforation design of the airflow-benches (4) is adapted to the specific growth cycle state of plants in the respective tray-receptacles (3) being accommodated underneath the airflow-benches (4).
